# EUROPEAN PATENT APPLICATION

(11) **EP 1 889 773 A2**
(43) Date of publication of application: **20.02.2008**
(21) Application number: 07015208.7
(22) Date of filing: 02.08.2007
(51) Int. Cl.: B62B 7/10, B62B 9/18

(54) **Shock absorbing mechanism for a stroller**

(30) Priority: 17.08.2006 CN 200620063189 U
(71) Applicant: Lerado (Zhong Shan) Industrial Co., Ltd., Zhong Shan City Guangdong (CN)
(72) Inventor: Yang, Cheng-Fan, Xue-Jia Tainan Hsien (TW)
(74) Representative: Wagner, Bernhard Peter

(57) **Abstract**

A shock absorbing mechanism is adapted for cushioning a stroller via a flexible arched deformation, has a connecting member (6) comprising at least an arched transverse portion (61), a pair of arched longitudinal portions (62) connected by the arched transverse portion at mid-portion; and a plurality of seesawing mounts (63) having a first end (631) mounted to the arched longitudinal portions, a second portion (632) pivotally connected to the struts respectively, and a middle portion (630) pivotally supported by the wheels. The weight of the stroller and content shall be vertically imposed on the second end of the seesawing mounts, that makes each of the seesawing mounts rotates about its middle portion in an angle thereby to tilt the first end upwardly in a proportional angle for bending the arched longitudinal portions upwardly for balancing the weight and cushioning a passenger sitting in the stroller while the stroller traveling on bumpy terrain.

## Description

### BACKGROUND OF THE INVENTION

### FIELD OF THE INVENTION

The present invention relates to a shock absorbing mechanism for a baby stroller and in particular, to a shock absorbing mechanism which is pivotally supported by wheels and connected between at least a front strut and a pair of rear struts of a baby stroller.

### DESCRIPTION OF THE RELATED ART

Many prior art strollers have no provision for absorbing road shock. Even in those cases where some shock absorption capability is provided, it usually takes the form of springs between the frame and the wheels that tend to rock the complete frame backward and forward. In other strollers where the wheels are independently sprung, each wheel can individually react to the shock of a bump.

However, the shock absorber at each wheel assembly is normally a compression spring or hydraulic cylinder. Such a device cushions movement upwardly and downwardly, but it is incapable of allowing the wheels to yield rearwardly to cushion shocks resulting from contact with the vertical surfaces of curbs, steps, or similar obstructions.

A shock absorber is shown in U.S. Pat. No. 5,581,843 to Purnell, wherein a wheel assembly includes a pair of wheels that biased by a tension spring downwardly after encountering a bump. The spring is a progressive rate spring such that its resistance to extension increases in proportion to the weight of the stroller and its contents.

As the wheel assembly of Purnell provides only a limited space for connecting the tension spring, the distance for shock absorbing is short; however, the spring disposed outside the forward side of the wheel assembly without any cover or shield, may become broken abruptly while being hit on obstacle.

Thus, it is desirable to provide a shock absorbing mechanism for the stroller in stead of the spring loaded wheel assembly of prior art.

### SUMMARY OF THE INVENTION

In order to achieve such a goal and eliminate the problems encountered in the prior art spring shock cushion, the present invention provides a shock absorbing mechanism having a connecting member pivotally connected to at least a rotatable front struts and a pair of rear struts. The connecting member is partially or all made of resilient material and formed with an arched shape. When the struts is bumped against an obstacle, the connecting member shall then be used to absorb the shock by deformation responsively to the movement of the wheels and the struts.

In one embodiment of the present invention, the connecting member may comprise a pair of arched longitudinal portions, at least an arched transverse portion, and a plurality of seesawing mounts. The pair of arched longitudinal portions is connected by the arched transverse portion at any mid-portion thereof that is capable of absorbing shocks in various directions while traveling on bumpy terrain. Each of the seesawing mounts has a middle portion pivotally supported by the wheels of the stroller, a first end mounted to the ends of the arched longitudinal portions, and a second end pivotally connected to the struts of the stroller.

The weight of the stroller and content shall then vertically imposed on the second end of the seesawing mounts, that makes each of the seesawing mounts rotates about its middle portion and tilt the first end upwardly in a proportional angle thereby bending the arched longitudinal portions upwardly for balancing the weight and cushioning the passenger in the stroller.

As will be appreciated, the front struts may comprise an upper segment, a lower segment both of which are articulated by a lockable joint. The lockable joint has a locked position which controllably locks the upper segment and lower segment in a substantial straight configuration, so as to keep the stroller in an erected position, and an unlock position that allows the upper segment and lower segment to pivotally close to each other, thereby to transfer the stroller into a collapsible state.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is a perspective view depicting a shock absorbing mechanism of the present invention as being embodied on a baby stroller.

FIG. 2 is a side elevation view of the baby stroller equipped with the shock absorbing mechanism of the present invention.

FIG. 3 is a side elevation view eliminated the wheels of the baby stroller as being equipped with the shock absorbing mechanism of the present invention.

FIG. 4 is a schematic side elevation view illustrating the connecting member of the shock absorbing mechanism equipped for absorbing a shock of bump.

FIG. 5 is a schematic side elevation view illustrating the deformation of the connecting member of the shock absorbing mechanism while in absorbing a shock of bump.

FIG. 6 is a schematic side elevation view illustrating the stroller being folded in a collapsed position.

### DETAILED DESCRIPTION OF THE PREFERRED EMBODIMENTS

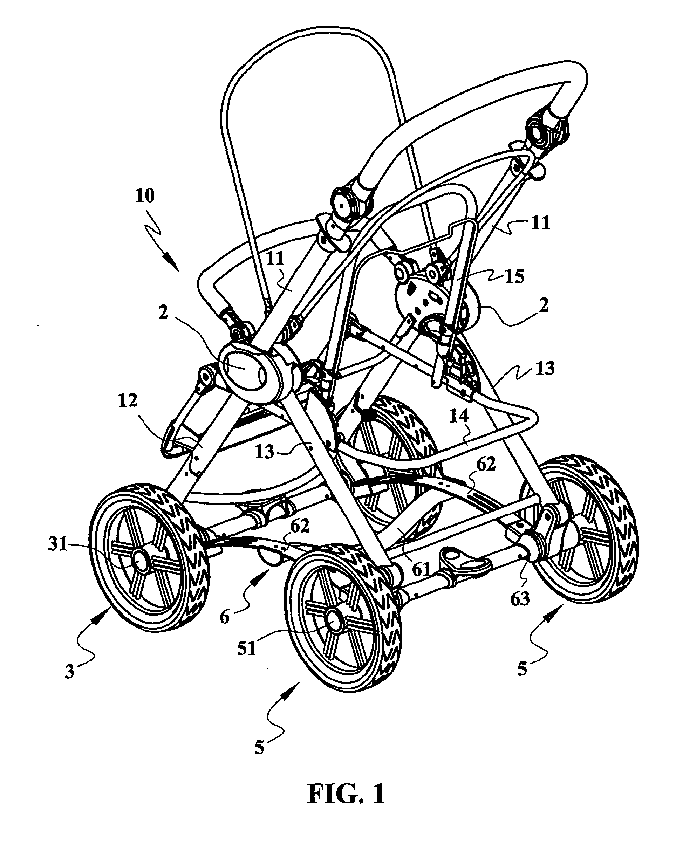

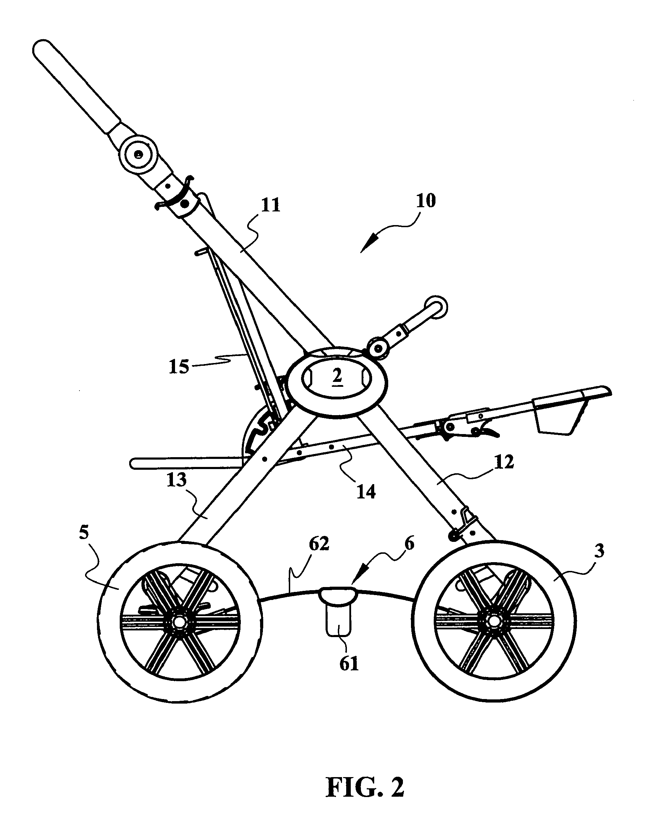

Referring to FIGS. 1 and 2, the present invention provides a shock absorbing mechanism including a connecting member 6 pivotally connected to at least a rotatable front wheel strut 12 and a pair of rear wheel struts 13 of a stroller frame 10. The stroller frame 10 has a pivotable base 2, at least a front wheel strut 12, a pair of rear wheel struts 13, a front wheel axle 31, a rear wheel axle 51, and a plurality of wheels 3 and 5 connected to the distal end of the front wheel axle 31 and the rear wheel axle 51 respectively.

The pivotable base 2 mounted on either sides of the stroller frame 10 and pivotally connected a pair of push arms 11 and the struts 12 and 13. A seat support rack 14 equipped with a backrest rack 15 is pivotally connected between the struts 12 and 13.

The connecting member 6 is partially or all made of a resilient material and formed with an arched shape, when the wheels bumped against an obstacle, the connecting member 6 shall then absorb the shock by deformation responsively to the movement of the struts 12 and 13 and wheels 3 and 5.

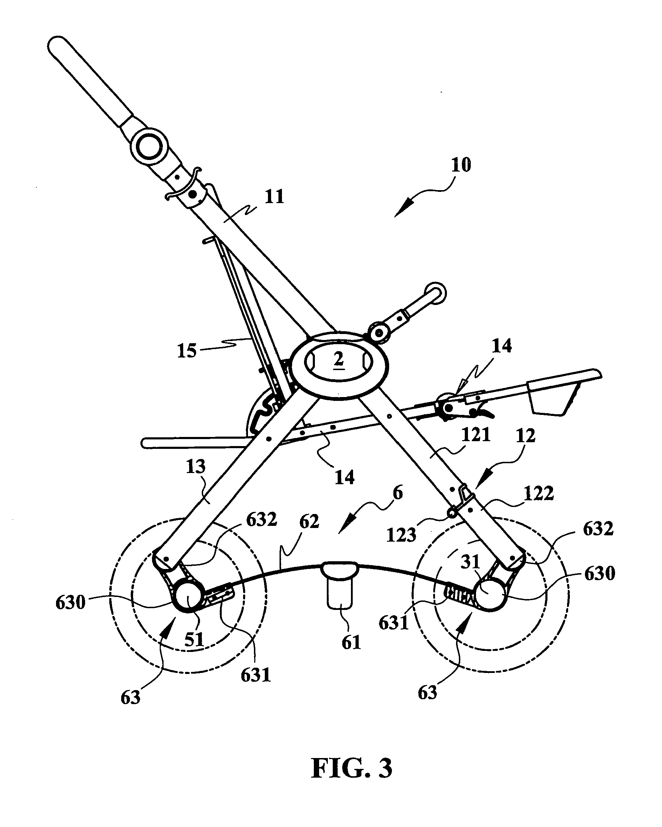

In one embodiment as showing in FIG. 3, the connecting member 6 may comprise a pair of arched longitudinal portions 62, at least an arched transverse portion 61, and a plurality of seesawing mounts 63. The pair of arched longitudinal portions 62 is connected by the arched transverse portion 61 at any mid-portion thereof to absorb shocks in various directions while the stroller traveling on bumpy terrain.

Each of the seesawing mounts 63 has a middle portion 630 pivotally supported by the wheels 3 or 5 via the front wheel axle 31 or rear wheel axle 51, a first end 631 mounted to the ends of the arched longitudinal portions, and a second end 632 pivotally connected to the struts 12 or 13 of the stroller frame 10.

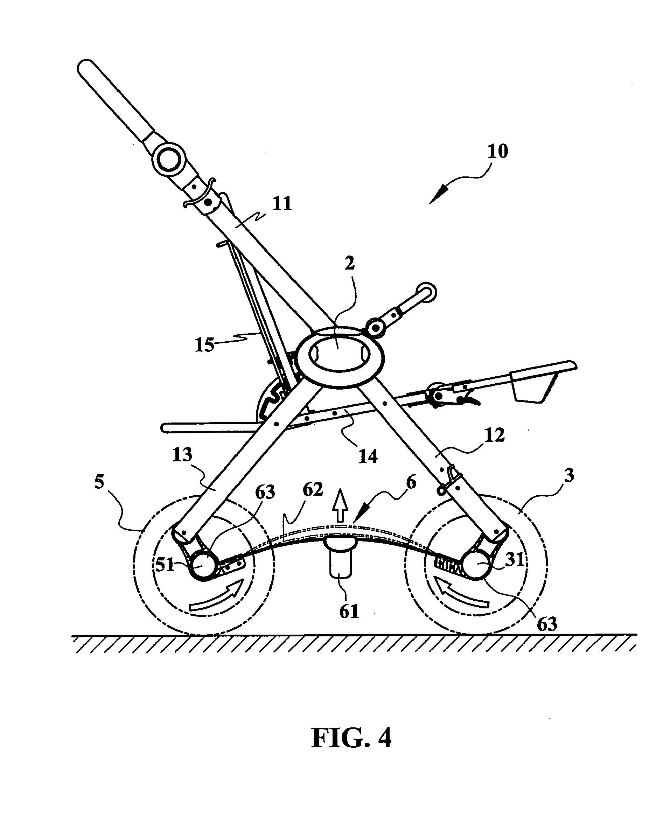

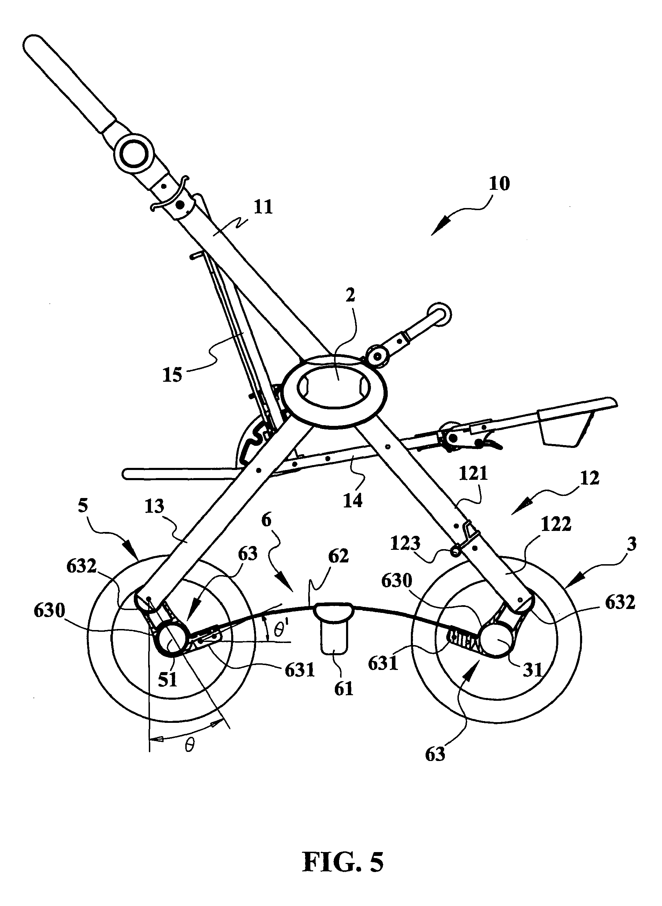

Referring to FIGS. 4 and 5, the weight of the stroller and content shall be vertically imposed on the second end 632 of the seesawing mounts 63, that makes each of the seesawing mounts 63 rotates about its middle portion 630 in an angle θ and tilt the first end 631 upwardly in a proportional angle θ' thereby bending the arched longitudinal portions 62 upwardly for balancing the weight and thereby cushioning a passenger in the stroller.

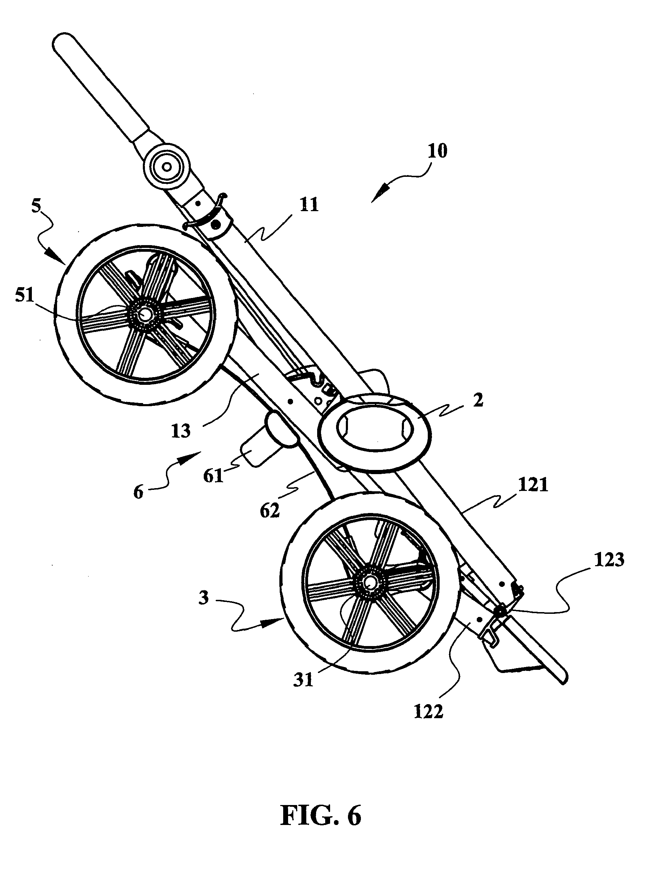

Referring to FIG. 6, as will be appreciated, the front struts 12 may comprise an upper segment 121, a lower segment 122 both of which are articulated by a lockable joint 123. The lockable joint 123 has a locked position which controllably locks the upper segment and lower segment in a substantial straight configuration, so as to keep the stroller in an erected position as shown in FIGS. 3 to 5, and an unlock position that allows the upper segment 121 and lower segment 122 to pivotally close to each other, thereby to transfer the stroller into a collapsible state as shown in FIG. 6.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A shock absorbing mechanism for a stroller, the stroller comprising at least a front wheel strut, a pair of rear wheel struts, a front wheel axle, a rear wheel axle, and a plurality of wheels connected to the front wheel axle and the rear wheel axle respectively; the shock absorbing mechanism comprising at least a connecting member made of a resilient material and formed with an arched shape; wherein the connecting member is pivotally connected between the front wheel strut and the pair of rear wheel struts, and pivotally supported by the wheels.

2. The wheel brake mechanism of claim 1, wherein the connecting member is pivotally supported by the wheels via the front wheel axle and the rear wheel axle.

3. The wheel brake mechanism of claim 1, wherein the front wheel strut comprises an upper segment, a lower segment both of which are articulated by a lockable joint.

4. The wheel brake mechanism of claim 3, wherein the lockable joint has a locked position which controllably locks the upper segment and lower segment in a substantial straight configuration, so as to keep the stroller in an erected position, and an unlock position that allows the upper segment and lower segment to pivotally close to each other, thereby to transfer the stroller into a collapsible state.

5. A shock absorbing mechanism for a stroller, the stroller comprising at least a front wheel strut, a pair of rear wheel struts, a front wheel axle, a rear wheel axle, and a plurality of wheels connected to the front wheel axle and the rear wheel axle respectively; the shock absorbing mechanism comprising at least a connecting member which comprises
at least an arched transverse portion;
a pair of arched longitudinal portions, connected by the arched transverse portion at any mid-portion thereof; and
a plurality of seesawing mounts having a first end mounted to the arched longitudinal portions, a second portion pivotally connected to the struts respectively, and a middle portion pivotally supported by the wheels.

6. The wheel brake mechanism of claim 5, wherein the middle portion of the seesawing mounts is pivotally supported by the wheels via the front wheel axle.

7. The wheel brake mechanism of claim 5, wherein the middle portion of the seesawing mounts is pivotally supported by the wheels via the rear wheel axle.

8. The wheel brake mechanism of claim 5, wherein the front wheel strut comprises an upper segment, a lower segment both of which are articulated by a lockable joint.

9. The wheel brake mechanism of claim 8, wherein the lockable joint has a locked position which controllably locks the upper segment and lower segment in a substantial straight configuration, so as to keep the stroller in an erected position, and an unlock position that allows the upper segment and lower segment to pivotally close to each other, thereby to transfer the stroller into a collapsible state.

10. A shock absorbing mechanism for a stroller, the stroller comprising a pivotable base , at least a front wheel strut, a pair of rear wheel struts, a front wheel axle, a rear wheel axle, and a plurality of wheels connected to the front wheel axle and the rear wheel axle respectively, wherein the shock absorbing mechanism has a connecting member comprising
at least an arched transverse portion;
a pair of arched longitudinal portions, connected by the arched transverse portion 61 at any mid-portion thereof; and
a plurality of seesawing mounts having a first end mounted to the arched longitudinal portions, a second portion pivotally connected to the struts respectively, and a middle portion pivotally supported by the wheels.

11. The wheel brake mechanism of claim 10, wherein the middle portion of the seesawing mounts is pivotally supported by the wheels via the front wheel axle.

12. The wheel brake mechanism of claim 10, wherein the middle portion of the seesawing mounts is pivotally supported by the wheels via the rear wheel axle.

13. The wheel brake mechanism of claim 10, wherein the front wheel strut comprises an upper segment, a lower segment both of which are articulated by a lockable joint.

14. The wheel brake mechanism of claim 13, wherein the lockable joint has a locked position which controllably locks the upper segment and lower segment in a substantial straight configuration, so as to keep the stroller in an erected position, and an unlock position that allows the upper segment and lower segment to pivotally close to each other, thereby to transfer the stroller into a collapsible state.
